# EUROPEAN PATENT APPLICATION

(11) **EP 4 606 778 A1**
(43) Date of publication of application: **27.08.2025**
(21) Application number: 23879632.0
(22) Date of filing: 05.10.2023
(51) Int. Cl.: C03B 5/027, C03B 5/24

(54) **MANUFACTURING METHOD AND MANUFACTURING DEVICE OF GLASS ARTICLE**

(30) Priority: 19.10.2022 JP 2022167593
(71) Applicant: Nippon Electric Glass Co., Ltd., Otsu-shi, Shiga 520-8639 (JP)
(72) Inventor: MABUCHI, Mina, Otsu-shi, Shiga 520-8639 (JP)
(74) Representative: Tetzner, Michael
(86) International application number: PCT/JP2023/036343
(87) International publication number: WO 2024/084985

(57) **Abstract**

A manufacturing method for a glass article includes a melting step of melting a glass raw material (Gr) by heating with an electrode (3) immersed in a molten glass (Gm) contained in a melting furnace (1), to thereby obtain the molten glass (Gm). The melting furnace (1) includes a heat insulating layer (8) that regulates a temperature of a ceiling wall (1c) of the melting furnace (1). In the melting step, a covering layer (Gx) including a batch layer (Ga) and a foam layer (Gb) is formed so as to cover a liquid surface (Ls) of the molten glass (Gm), and the heat insulating layer (8) regulates a minimum temperature of the ceiling wall (1c) within a range of from 600°C to 1,100°C.

## Description

### Technical Field

The present invention relates to a manufacturing method and a manufacturing apparatus for a glass article.

### Background Art

A manufacturing method for a glass article such as a glass fiber or a glass sheet includes, for example, a supplying step of supplying a glass raw material from an upstream side of a melting furnace onto a molten glass contained in the melting furnace, a melting step of melting the glass raw material to obtain the molten glass, and a discharging step of discharging the molten glass from a downstream side of the melting furnace.

In the melting step, for example, in some cases, the glass raw material is melted by heating (through application of a current) with an electrode immersed in the molten glass, to thereby obtain the molten glass. When heating with the electrode is used in this way, from the viewpoint of improving thermal efficiency of the melting furnace, a liquid surface of the molten glass is sometimes covered with a covering layer derived from the glass raw material to suppress heat dissipation from the molten glass (see, for example, Patent Literature 1). Here, the covering layer includes a batch layer formed from the glass raw material, and a foam layer formed along with melting of the glass raw material.

### Citation List

Patent Literature 1: WO 2019/054385 A1

### Summary of Invention

### Technical Problem

When the liquid surface of the molten glass is covered with the covering layer, it is required that the covering layer be at a temperature (viscosity) at which a gas generated from the covering layer and the molten glass sufficiently escapes during a process of melting the glass raw material. Meanwhile, when a glass flow rate is increased in order to improve production efficiency of a glass article, it is required to increase an amount of the glass raw material to be supplied to the glass melting furnace.

However, when the amount of the glass raw material to be supplied is increased, the covering layer that covers the liquid surface of the molten glass inevitably contains a large amount of the low-temperature and unmolten glass raw material. As a result, the temperature of the covering layer decreases, and thus the gas is difficult to escape from the covering layer. When the gas is difficult to escape from the covering layer as described above, a liquid surface level of the molten glass becomes unstable, and hence there may arise a problem in that the production efficiency of a glass article is deteriorated.

The present invention has an object to improve production efficiency of a glass article by suppressing a decrease in temperature of a covering layer that covers a liquid surface of a molten glass and thus stabilizing a liquid surface level of the molten glass.

### Solution to Problem

(1) According to the present invention devised in order to solve the problems described above, there is provided a manufacturing method for a glass article, comprising: a supplying step of supplying a glass raw material from an upstream side of a melting furnace onto a molten glass contained in the melting furnace; a melting step of melting the glass raw material by heating with an electrode immersed in the molten glass, to thereby obtain the molten glass; and a discharging step of discharging the molten glass from a downstream side of the melting furnace. The melting furnace comprises a temperature regulating structure configured to regulate a temperature of a ceiling wall of the melting furnace. In the melting step, a covering layer comprising a batch layer and a foam layer is formed so as to cover a liquid surface of the molten glass, and a minimum temperature of the ceiling wall is regulated within a range of from 600°C to 1,100°C by the temperature regulating structure.
   When the minimum temperature of the ceiling wall is lower than 600°C due to the temperature regulating structure, the temperature of the covering layer that covers the liquid surface of the molten glass decreases, and hence a gas is difficult to escape from the covering layer. Meanwhile, when the minimum temperature of the ceiling wall exceeds 1,100°C due to the temperature regulating structure, for example, a part of the covering layer (for example, foam layer) may disappear, and thus there is a fear in that thermal efficiency of the melting furnace decreases significantly. In contrast, when the temperature regulating structure regulates the minimum temperature of the ceiling wall within a range of from 600°C to 1,100°C, the decrease in temperature of the covering layer can be suppressed by the heat of the ceiling wall while maintaining the covering layer in a stable state. Therefore, a liquid surface level of the molten glass can be stabilized, and production efficiency of a glass article can be improved.
(2) In the configuration of the above-mentioned item (1), the temperature regulating structure may comprise a heat insulating layer provided on an outer side of the ceiling wall.
   In this manner, the temperature of the ceiling wall is reliably regulated, and the minimum temperature of the ceiling wall is easily controlled.
(3) In the configuration of the above-mentioned item (1) or (2), the temperature regulating structure may comprise a resistance heater.
   In this manner, the temperature of the ceiling wall is reliably regulated, and the minimum temperature of the ceiling wall is easily controlled.
(4) In the configuration of any one of the above-mentioned items (1) to (3), the temperature regulating structure may comprise an induction heater.
   In this manner, the temperature of the ceiling wall is reliably regulated, and the minimum temperature of the ceiling wall is easily controlled.
(5) In the configuration of any one of the above-mentioned items (1) to (4), it is preferred that the melting step further comprise: a measuring step of measuring a temperature of the ceiling wall; and an adjusting step of adjusting a temperature of heat retention by the temperature regulating structure based on the temperature of the ceiling wall measured in the measuring step.
   In this manner, it is easier to precisely control the minimum temperature of the ceiling wall.
(6) In the configuration of any one of the above-mentioned items (1) to (5), it is preferred that the minimum temperature of the ceiling wall be higher on the downstream side of the melting furnace than on the upstream side of the melting furnace.
   A gas generated due to the glass raw material is more likely to escape from the foam layer than from the batch layer. An amount of the unmolten glass raw material gradually decreases from the upstream side to the downstream side of the melting furnace, and hence the batch layer tends to decrease and the foam layer tends to increase on the downstream side of the melting furnace. Therefore, when the minimum temperature of the ceiling wall is higher on the downstream side of the melting furnace than on the upstream side of the melting furnace, the gas is allowed to efficiently escape through the foam layer on the downstream side of the melting furnace.
(7) According to the present invention devised in order to solve the problems described above, there is provided a manufacturing apparatus for a glass article, comprising a melting furnace configured to contain a molten glass therein, the melting furnace comprising: a supply device, which is provided on a front wall of the melting furnace, and is configured to supply a glass raw material onto the molten glass; an electrode, which is immersed in the molten glass, and is configured to heat and melt the glass raw material; a discharge port, which is formed in a rear wall of the melting furnace, and is configured to discharge the molten glass; and a temperature regulating structure configured to regulate a temperature of a ceiling wall of the melting furnace. The temperature regulating structure is configured to regulate a minimum temperature of the ceiling wall within a range of from 600°C to 1,100°C.

In this manner, the same actions and effects as those of the corresponding configurations that have been described above can be enjoyed.

### Advantageous Effects of Invention

According to the present invention, it is possible to improve production efficiency of the glass article by suppressing a decrease in temperature of the covering layer covering the liquid surface of the molten glass and thus stabilizing the liquid surface level of the molten glass.

### Brief Description of Drawings

FIG. 1 is a sectional view for illustrating a manufacturing apparatus for a glass article according to a first embodiment of the present invention.
FIG. 2 is a sectional view for illustrating a manufacturing apparatus for a glass article according to a second embodiment of the present invention.

### Description of Embodiments

Now, embodiments of the present invention are described with reference to the attached drawings. Overlapping description may be omitted by denoting corresponding constituent elements in the embodiments by the same reference symbols. When only part of a configuration is described in each of the embodiments, a configuration in other embodiments that has already been described may be adopted for other parts of the configuration. In addition, configurations may be combined in a combination explicit in the description of each of the embodiments, and not only that, part of configurations of a plurality of the embodiments may be combined in an even implicit combination as long as the combination has no particular disadvantage.

### (First Embodiment)

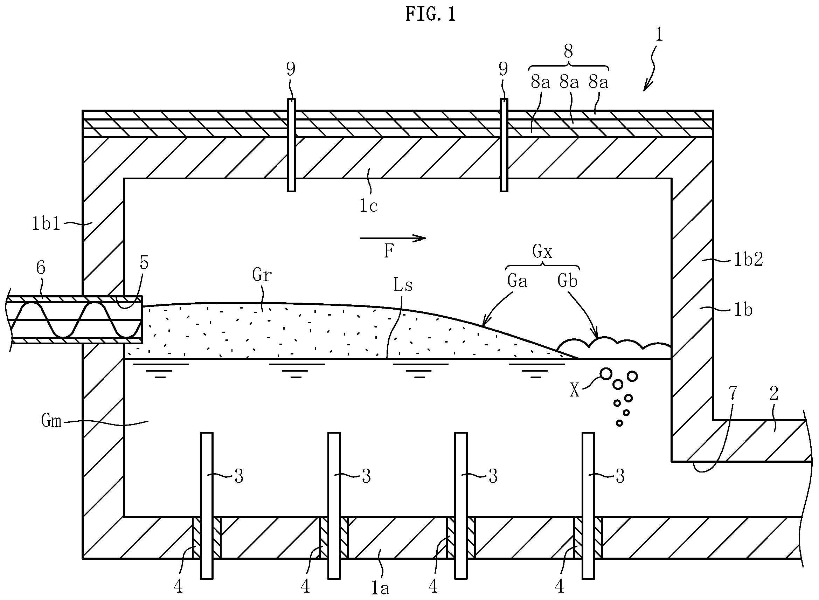

As illustrated in FIG. 1, a manufacturing apparatus for a glass article according to a first embodiment comprises a melting furnace 1, a feeder 2, and a forming device (not shown).

The melting furnace 1 comprises a bottom wall 1a, a side wall 1b, and a ceiling wall 1c. Those constituent elements 1a to 1c define a space for containing the molten glass Gm. The side wall 1b comprises a front wall 1b1 located on an upstream side, and a rear wall 1b2 located on a downstream side.

The melting furnace 1 is configured to melt a glass raw material Gr to form the molten glass Gm. The glass raw material Gr may comprise cullet in addition to a natural raw material and a chemical raw material. When the glass article is a glass fiber, the molten glass Gm can be E-glass, NE-glass, C-glass, S-glass, T-glass, or D-glass. When the glass article is a glass substrate for a display, the molten glass Gm can be alkali-free glass. Further, when the glass article is a cover glass for a display or the like, the glass article can be aluminosilicate glass for chemical strengthening.

A plurality of rod-shaped electrodes 3 are mounted to the bottom wall 1a of the melting furnace 1. The shape of the electrode 3 is not limited to a rod shape, and may be a sheet shape, a block shape, or a combination thereof. Further, the electrodes 3 may be mounted to the side wall of the melting furnace 1 (for example, the side wall extending along a flowing direction F to be described later). The electrode 3 is made of, for example, molybdenum (Mo). The electrodes 3 are immersed in the molten glass Gm, and melt the glass raw material Gr by heating the molten glass Gm through application of a current. The electrodes 3 are received in through holes formed in the bottom wall 1a in a state of being held in cylindrical electrode holders 4 each comprising a cooling mechanism (not shown). That is, the electrode holder 4 is held in the bottom wall 1a, and the electrode 3 is held in the electrode holder 4. In this state, a protrusion length of the electrode 3 in the melting furnace 1 can be adjusted by changing an insertion length of the electrode 3 to be inserted into the melting furnace 1. The number or arrangement positions of the electrodes 3 can be appropriately changed depending on the size of the melting furnace 1, or the like.

In this embodiment, a heating part, such as a burner for melting the glass raw material Gr is not provided in an upper space above a liquid surface Ls of the molten glass Gm in the melting furnace 1. That is, in this embodiment, a so-called all-electric melting method is adopted in which the glass raw material Gr is melted only by heating through application of a current with the electrodes 3 in a melting step to be described later. A burner may be used in a start-up step before starting the melting step (step of increasing a temperature of the melting furnace from room temperature to a temperature at which the glass raw material can be melted).

A supply port 5 for supplying the glass raw material Gr is formed in the front wall 1b1 of the melting furnace 1. A supply device 6 is provided at this supply port 5. In this embodiment, the supply device 6 is a screw feeder. The supply device 6 may be any other publicly-known supply device such as a pusher or a vibrating feeder. The number or arrangement position of the supply device 6 can be appropriately changed depending on the size of the melting furnace 1, or the like.

A discharge port 7 for discharging the molten glass Gm is formed in the rear wall 1b2 of the melting furnace 1. The feeder 2 is connected to this discharge port 7, and the molten glass Gm is supplied sequentially from the melting furnace 1 to the feeder 2. In the melting furnace 1 as described above, the molten glass Gm flows along the flowing direction F from the front wall 1b1 toward the rear wall 1b2.

The glass raw material Gr supplied by the supply device 6 is melted by heating through application of a current with the electrodes 3, and the molten glass Gm is continuously produced. The liquid surface Ls of the molten glass Gm is covered with a covering layer Gx. The covering layer Gx comprises a batch layer Ga formed from the glass raw material Gr, and a foam layer Gb formed along with the melting of the glass raw material Gr. The foam layer Gb is formed along with generation of a gas X such as a carbon oxide gas (CO or CO₂), an O₂ gas, or an SO₂ gas due to the glass raw material Gr. Heat dissipation from the molten glass Gm can be suppressed by covering the liquid surface Ls of the molten glass Gm with the covering layer Gx in this manner. As a result, a temperature of the molten glass Gm can be reliably regulated, and hence energy saving can be achieved. In FIG. 1, the foam layer Gb is illustrated as being formed only on a downstream side of the melting furnace 1, but may also be formed on an upstream side of the melting furnace 1. Specifically, for example, on the upstream side of the melting furnace 1, the foam layer Gb may be formed on each side of the batch layer Ga in a width direction (direction orthogonal to the flowing direction F). Further, the foam layer Gb may be formed between the batch layer Ga and the liquid surface Ls of the molten glass Gm.

On the ceiling wall 1c of the melting furnace 1, a heat insulating layer 8 that covers at least a part of an outer wall surface of the ceiling wall 1c is provided as the temperature regulating structure configured to regulate a temperature of the ceiling wall 1c. The heat insulating layer 8 is formed of a blanket 8a of a single layer or a plurality of layered blankets 8a. In the illustrated example, a state in which three blankets 8a are layered is exemplified.

For example, a blanket made of a refractory fiber material can be used as the blanket 8a. Specifically, a blanket with heat resistance that enables withstanding a temperature of 1,100°C or more (preferably 1,150°C or more) and with elasticity can be used. As examples of such a blanket, blankets made of alumina fibers, silica fibers, zirconia fibers, and blends of those fibers can be used.

In this embodiment, the heat insulating layer 8 is provided so as to cover an entire region from an upstream side to a downstream side of the outer wall surface of the ceiling wall 1c. However, the arrangement position of the heat insulating layer 8 can be appropriately changed, such as by providing the heat insulating layer 8 only on the downstream side of the ceiling wall 1c.

A thermometer (for example, thermocouple) 9 that can measure the temperature of the ceiling wall 1c is provided on the ceiling wall 1c of the melting furnace 1c.

The feeder 2 is used to transfer the molten glass Gm, which is formed in the melting furnace 1, to the forming device on the downstream side of the feeder 2. The feeder 2 comprises, as required, for example, a transfer path for transferring the molten glass Gm, a fining chamber for subjecting the molten glass Gm to fining treatment, and a homogenization chamber (stirring chamber) for subjecting the molten glass Gm to stirring treatment by a stirrer.

The forming device (not shown) forms a glass article from the molten glass Gm supplied by the feeder 2. In this embodiment, the glass article is a glass fiber.

When the glass article is a glass fiber, as the forming device, for example, a bushing provided at the bottom of the feeder 2 can be used. The bushing comprises a plurality of nozzles through which the molten glass is caused to flow out to form glass fibers.

Next, a manufacturing method for a glass article according to this embodiment is described. In this method, the manufacturing apparatus described above is used.

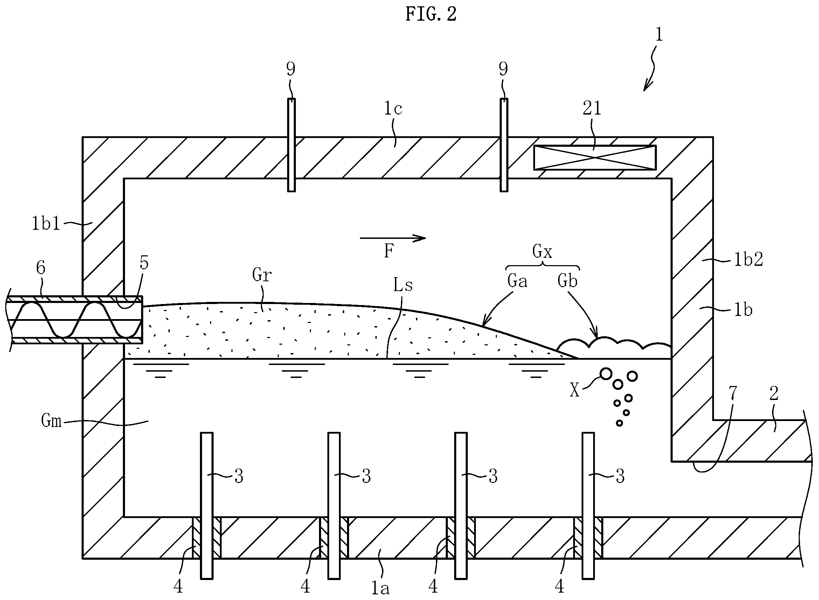

As illustrated in FIG. **2****,** this method comprises a supplying step, a melting step, a discharging step, a transferring step, and a forming step.

In the supplying step, the glass raw material Gr is supplied from the supply device 6 located on the upstream side of the melting furnace 1 onto the molten glass Gm contained in the melting furnace 1.

In the melting step, the glass raw material Gr is melted by heating with the electrodes 3 immersed in the molten glass Gm, thereby obtaining the molten glass Gm. At this time, a temperature of heating by the electrodes 3 and the temperature of the upper space above the liquid surface Ls of the molten glass Gm in the melting furnace 1 are adjusted so that the covering layer Gx comprising the batch layer Ga and the foam layer Gb is formed on the liquid surface Ls of the molten glass Gm. In the melting step, combustion heating by a burner may be used in an auxiliary manner. In this case, a ratio of an amount of heat generated by the electrodes to a total amount of heat generated by the electrodes and the burner is preferably 80% or more, more preferably 90% or more, still more preferably 100%, that is, it is still more preferred to use the all-electric melting method.

An area A of a portion of the liquid surface Ls of the molten glass Gm in the melting furnace 1 that is covered with the covering layer Gx is preferably 80% or more of a total area B of the liquid surface Ls of the molten glass Gm in the melting furnace 1, more preferably 90% or more. Meanwhile, the upper limit of the area A can be 100% or less of the area B, and the upper limit is more preferably 98% or less. Further, an area C of a portion of the liquid surface Ls of the molten glass Gm in the melting furnace 1 that is covered with the foam layer Gb is preferably from 5% to 50% of an area D of a portion of the liquid surface Ls of the molten glass Gm in the melting furnace 1 that is covered with the batch layer Ga. The area C is more preferably from 10% to 40% of the area D, still more preferably from 15% to 30% of the area D.

Further, in the melting step, the heat insulating layer 8 regulates the minimum temperature of the ceiling wall 1c within a range of from 600°C to 1,100°C. Here, when the minimum temperature of the ceiling wall 1c is lower than 600°C due to the heat insulating layer 8, the temperature (viscosity) of the covering layer Gx that covers the liquid surface Ls of the molten glass Gm decreases, and the gas X generated along with the melting of the glass raw material Gr is difficult to escape from the covering layer Gx. Meanwhile, when the minimum temperature of the ceiling wall 1c exceeds 1,100°C due to the heat insulating layer 8, for example, a part of the covering layer Gx may disappear, and thus there is a fear in that thermal efficiency of the melting furnace 1 decreases significantly. In contrast, when the heat insulating layer 8 regulates the minimum temperature of the ceiling wall 1c within a range of from 600°C to 1,100°C, the decrease in temperature of the covering layer Gx can be suppressed by the heat of the ceiling wall 1c while maintaining the covering layer Gx in a stable state. Therefore, the gas X easily escapes from the covering layer Gx to the upper space. As a result, the level of the liquid surface Ls of the molten glass Gm is stabilized, and hence production efficiency of a glass article can be improved.

The minimum temperature of the ceiling wall 1c is preferably from 600°C to 1,000°C, still more preferably from 600°C to 800°C. Further, the maximum temperature of the ceiling wall 1c is preferably from 700°C to 1,100°C, more preferably from 750°C to 1,050°C, still preferably from 800°C to 1,000°C.

It is preferred that the minimum temperature of the ceiling wall 1c be higher on the downstream side of the melting furnace 1 than on the upstream side thereof. Herein, the phrase "upstream side of the melting furnace 1" means, for example, a region on an upstream side with respect to a position at which the inside of the melting furnace 1 is divided in half in the flowing direction F. The phrase "downstream side of the melting furnace 1" means, for example, a region on a downstream side with respect to the position at which the inside of the melting furnace 1 is divided in half in the flowing direction F. The gas X is more likely to escape from the foam layer Gb than from the batch layer Ga. An amount of the unmolten glass raw material Gr gradually decreases from the upstream side to the downstream side of the melting furnace 1, and hence the batch layer Ga tends to decrease and the foam layer Gb tends to increase on the downstream side of the melting furnace 1. Therefore, when the minimum temperature of the ceiling wall 1c is higher on the downstream side of the melting furnace 1 than on the upstream side of the melting furnace 1, the gas X is allowed to efficiently escape through the foam layer Gb on the downstream side of the melting furnace 1.

A temperature difference (T1-T2) between a minimum temperature T1 of the ceiling wall 1c on the downstream side of the melting furnace and a minimum temperature T2 of the ceiling wall 1c on the upstream side of the melting furnace 1 varies significantly depending on a length (dimension in the flowing direction F) of the melting furnace. For example, the temperature difference (T1-T2) is preferably 10°C or more, more preferably 15°C or more, still more preferably 20°C or more. Meanwhile, the upper limit of the temperature difference is, for example, preferably 500°C or less, more preferably 450°C or less, still more preferably 400°C or less.

In the melting step, the temperature of the ceiling wall 1c may be measured with the thermocouple 9, and the temperature for temperature regulation by the heat insulating layer 8 may be adjusted according to the measured temperature. Examples of a method of adjusting the temperature for temperature regulation by the heat insulating layer 8 include changing the number of the layered blankets 8a, and changing the arrangement position of the blanket 8a. In this way, the minimum temperature of the ceiling wall 1c can be accurately controlled.

In the discharging step, the molten glass Gm is discharged from the discharge port 7 on the downstream side of the melting furnace 1, and the molten glass Gm is supplied to the feeder 2.

In the transferring step, the molten glass Gm formed in the melting furnace 1 is transferred to the forming device by the feeder 2.

In the forming step, a glass fiber as a glass article is formed from the molten glass Gm by the forming device.

### (Second Embodiment)

In a second embodiment, a modification example of the temperature regulating structure of the ceiling wall 1c in a manufacturing apparatus and a manufacturing method for a glass article is exemplified. As illustrated in FIG. 2, in this embodiment, a heater 21 is provided inside the ceiling wall 1c as the temperature regulating structure.

For example, a resistance heater or an induction heater can be used as the heater 21. When a plurality of heaters 21 are provided, resistance heaters and induction heaters may be used in combination. For example, SiC heaters, molybdenum disilicide heaters, and metal heaters can be used as resistance heaters. For example, heaters of an iron alloy, a chrome alloy, a nickel alloy, an aluminum alloy, platinum, a platinum alloy, and tungsten can be used as metal heaters.

The heater 21 regulates the minimum temperature of the ceiling wall 1c within a range of from 600°C to 1,100°C in the melting step. In the melting step, the temperature of the ceiling wall 1c may be measured with the thermocouple 9, and the temperature of heating (temperature for temperature regulation) by the heater 21 may be adjusted according to the measured temperature.

In this embodiment, the heater 21 is provided only on the downstream side of the outer wall surface of the ceiling wall 1c. However, the arrangement position of the heater 21 can be appropriately changed, such as by providing the heater 21 on each of the upstream side and the downstream side of the ceiling wall 1c.

The arrangement mode of the heater 21 is not limited as long as a temperature of the ceiling wall 1c can be regulated. For example, a part of the heater 21 provided inside the ceiling wall 1c may be exposed to an inner side of the ceiling wall 1c (inside the furnace). Alternatively, the heater 21 may be provided on an outer side of the ceiling wall 1c (outside the furnace).

The present invention is not limited to the configurations of the above-mentioned embodiments. In addition, the action and effect of the present invention are not limited to those described above. The present invention may be modified in various forms within the range not departing from the gist of the present invention.

In the above-mentioned embodiments, the heat insulating layer 8 comprising the blankets 8a and the heater 21 may be used in combination as the temperature regulating structure of the ceiling wall 1c.

In the above-mentioned embodiments, description has been given of the case in which the glass article is a glass fiber. However, the glass article may be, for example, a glass sphere, a glass tube, a glass block, a glass sheet, a glass roll, or the like, and may have other appropriate shapes. When the glass article is a glass sheet or a glass roll, for example, a device capable of performing a down-draw method, such as an overflow down-draw method, or a float method can be used as the forming device.

In the above-mentioned embodiments, the number of the layered blankets 8a that covers the outer wall surface of the ceiling wall 1c may be larger on the downstream side of the melting furnace 1 than on the upstream side thereof. Alternatively, the blanket 8a may cover the outer wall surface of the ceiling wall 1c from the upstream side to the downstream side, and the heater 21 may be provided only on the downstream side of the ceiling wall 1c. In this manner, the minimum temperature of the ceiling wall 1c is easily set higher on the downstream side of the melting furnace 1 than on the upstream side thereof.

### Examples

The glass article according to the present invention is described below by way of Examples. The following Examples are merely examples, and the present invention is by no means limited to the following Examples.

In Comparative Example 1, no temperature regulating structure is provided on the ceiling wall of the melting furnace. Meanwhile, in Example 1, a blanket of a single layer (silica fiber) was provided so as to cover the entire outer wall surface of the ceiling wall as the temperature regulating structure of the ceiling wall of the melting furnace (see FIG. 1). In Example 2, a resistance heater was provided only on the ceiling wall on the downstream side of the melting furnace as the temperature regulating structure of the ceiling wall of the melting furnace (see FIG. 2). In Example 3, three layered blankets (silica fibers) were provided so as to cover the entire outer wall surface of the ceiling wall as the temperature regulating structure of the ceiling wall of the melting furnace (see FIG. 1).

For each of Comparative Example 1 and Examples 1 to 3, the supplying step, the melting step, and the discharging step were performed, and a temperature of the ceiling wall, a standard deviation of a liquid surface level of the molten glass, and a relative flow rate of the molten glass were measured during the feeding, melting, and discharging steps. The relative flow rate of the molten glass was measured using a flow rate in Comparative Example 1 as a benchmark. The flow rate of the molten glass was calculated from the obtained glass article. The results of these measurements are shown in Table 1.

**[Table 1]**

| | Comparative Example 1 | Example 1 | Example 2 | Example 3 |
|---|---|---|---|---|
| Minimum temperature of ceiling wall (downstream side) | 550°C | 610°C | 885°C | 1,000°C |
| Difference in minimum temperature between upstream side and downstream side | 10°C | 10°C | 20°C | 25°C |
| Standard deviation of liquid surface level of molten glass | 0.19 mm | 0.13 mm | 0.11 mm | 0.09 mm |
| Relative flow rate of molten glass | 100% | 105% | 110% | 117% |

In Comparative Example 1 in which no temperature regulating structure was provided on the ceiling wall, the minimum temperature of the ceiling wall was lower than 600°C. In contrast, in Examples 1 to 3 in which the temperature regulating structure was provided on the ceiling wall, the minimum temperature of the ceiling wall was able to be maintained in a range of from 600°C to 1,100°C. In all of Examples 1 to 3, fluctuations of the liquid surface level of the molten glass were suppressed more than in Comparative Example 1. Further, in Examples 1 to 3, the flow rate of the molten glass was also able to be gradually increased as the minimum temperature of the ceiling wall increased.

### Reference Signs List

1 melting furnace
- 1a: bottom wall
- 1b: side wall
- 1b1: front wall
- 1b2: rear wall
- 1c: ceiling wall
- 2: feeder
- 3: electrode
- 4: electrode holder
- 5: supply port
- 6: supply device
- 7: discharge port
- 8: heat insulating layer
- 8a: blanket
- 9: thermocouple
- 21: heater
- Ga: batch layer
- Gb: foam layer
- Gm: molten glass
- Gr: glass raw material
- Gx: covering layer
- Ls: liquid surface
- X: gas

## Claims

1. A manufacturing method for a glass article, comprising:
a supplying step of supplying a glass raw material from an upstream side of a melting furnace onto a molten glass contained in the melting furnace;
a melting step of melting the glass raw material by heating with an electrode immersed in the molten glass, to thereby obtain the molten glass; and
a discharging step of discharging the molten glass from a downstream side of the melting furnace,
wherein the melting furnace comprises a temperature regulating structure configured to regulate a temperature of a ceiling wall of the melting furnace, and
wherein, in the melting step, a covering layer comprising a batch layer and a foam layer is formed so as to cover a liquid surface of the molten glass, and a minimum temperature of the ceiling wall is regulated within a range of from 600°C to 1,100°C by the temperature regulating structure.

2. The manufacturing method for a glass article according to claim 1, wherein the temperature regulating structure comprises a heat insulating layer provided on an outer side of the ceiling wall.

3. The manufacturing method for a glass article according to claim 1 or **2,** wherein the temperature regulating structure comprises a resistance heater.

4. The manufacturing method for a glass article according to claim 1 or **2,** wherein the temperature regulating structure comprises an induction heater.

5. The manufacturing method for a glass article according to claim 1 or **2,** wherein the melting step further comprises:
a measuring step of measuring a temperature of the ceiling wall; and
an adjusting step of adjusting a temperature for temperature regulation by the temperature regulating structure based on the temperature of the ceiling wall measured in the measuring step.

6. The manufacturing method for a glass article according to claim 1 or **2,** wherein the minimum temperature of the ceiling wall is higher on the downstream side of the melting furnace than on the upstream side of the melting furnace.

7. A manufacturing apparatus for a glass article, comprising a melting furnace configured to contain a molten glass therein,
the melting furnace comprising:
a supply device, which is provided on a front wall of the melting furnace, and is configured to supply a glass raw material onto the molten glass;
an electrode, which is immersed in the molten glass, and is configured to heat and melt the glass raw material;
a discharge port, which is formed in a rear wall of the melting furnace, and is configured to discharge the molten glass; and
a temperature regulating structure configured to regulate a temperature of a ceiling wall of the melting furnace,
wherein the temperature regulating structure is configured to regulate a minimum temperature of the ceiling wall within a range of from 600°C to 1,100°C.
